# EUROPEAN PATENT APPLICATION

(11) **EP 4 804 079 A1**
(43) Date of publication of application: **09.09.2026**
(21) Application number: 25226276.1
(22) Date of filing: 22.12.2025
(51) Int. Cl.: G06N 3/045, G06N 3/0895, G06N 3/096

(54) **METHOD AND SYSTEM FOR FORMAL CLAUSE BASED REFINEMENT OF LARGE LANGUAGE MODEL (LLM) GENERATED VALIDATORS**

(30) Priority: 05.03.2025 IN 202521019821
(71) Applicant: Tata Consultancy Services Limited, Maharashtra (IN)
(72) Inventor: AGRAWAL, Supriya, 411057 Pune, Maharashtra (IN); VERMA, Sagar Kumar, 411057 Pune, Maharashtra (IN); PAGAR, Siddhesh Balasaheb, 411057 Pune, Maharashtra (IN); KARMARKAR, Hrishikesh Sawalaram, 400021 Mumbai, Maharashtra (IN); RAMANATHAN, Venkatesh, 411028 Pune, Maharashtra (IN)
(74) Representative: Goddar, Heinz J.

(57) **Abstract**

Data generated by LLMs require to be validated to ensure accuracy. To address this issue, the generated data had to be manually validated, which was time-consuming and impractical as the volume of generated data could be huge. Though there are some automated approaches to provide a good starting point for assessing the quality of the generated data, these approaches do not correct the data or explain reasons for the errors in the data. Method and system disclosed herein facilitate fine-tuning of a validator, using a formal clause based approach. The validator, once fine-tunes, is then used for identifying a generator that generates accurate data values, which in turn maybe used for different applications.

## Description

### CROSS-REFERENCE TO RELATED APPLICATIONS AND PRIORITY

The present application claims priority from Indian application no. 202521019821, filed on March 5, 2025.

### TECHNICAL FIELD

The disclosure herein generally relates to Large Language Models (LLM), and, more particularly, to a method and system for formal clause based refinement of Large Language Model (LLM) generated validators.

### BACKGROUND

Synthetic data is artificially generated data that replicates patterns and relationships found in real-world data, but which is produced by different algorithms, generative models, or simulations. Synthetic data generation offers a scalable and cost-efficient method to produce data for a variety of applications, such as training and testing machine learning models, creating test suites for software testing, or for research purposes. This is especially useful in scenarios where access to real data is limited due to privacy concerns, data scarcity, or data sharing restrictions. Synthetic data is considered to be high-quality when it is accompanied by labels that are closely aligned with human intent or requirements of the target application.

Over the years, there has been significant progress in using machine learning models such as GAN (Generative Adversarial Networks), VAE (Variational Autoencoders), and LLM (Large Language Models) to generate high quality synthetic data. Although, the incorporation of these models has significantly improved the quality of the data by incorporating real world patterns and relationships during model training, it can still contain errors, biases, and inaccuracies. Below par synthetic data can have a significant negative impact on the quality of the solutions being delivered to clients.

While LLMs can be used for generating the synthetic data, a key and recurring challenge is in building trust and credibility in the LLM generated synthetic data, while keeping generation costs low. For instance, a common issue faced was of LLM hallucinations, often leading to the generation of incorrect or unrealistic data that diverged from the requirements given by the textual specifications. This was deemed unacceptable since, many applications, such as healthcare applications, fall under the category of safety-critical applications and incorrectly generated patient data used for testing, can have serious consequences for the health and safety of patients. To address this issue, the generated data had to be manually validated, which was time-consuming and impractical as the volume of generated data could be huge.

A potential solution to reduce the dependence on manual evaluation, was automated evaluation. Automated evaluation techniques could replace manual evaluation and provide a scalable solution to verify the correctness of the generated data. Some automated evaluators use LLM-as-judges with or without human-in-the-loop, while others use evaluation metrics such a superGlue, HellaSwag, MMLU, and so on. In cases, where the LLMs are used to generate programs, which in turn generates data, it is common to use functional correctness metrics like passk which computes the probability that at least one of the top k-generated code samples for the data generation problem passes the unit tests. Although, current automated evaluation techniques can provide a good starting point for assessing the quality of the generated data, these approaches do not correct the data or explain reasons for the errors in the data.

### SUMMARY

Embodiments of the present disclosure present technological improvements as solutions to one or more of the above-mentioned technical problems recognized by the inventors in conventional systems. For example, in one embodiment, a processor implemented method is provided. The method includes processing, using a Large Language Model (LLM) via one or more hardware processors, an input specification in natural language, to generate a plurality of generators and a validator, wherein each of the plurality of generators generates a single data value and the validator labels a data value as one of true and false; and iteratively performing, via the one or more hardware processors, for a pre-defined number of iterations: selecting a generator from among the plurality of generators using sampling to generate an associated data value; classifying, via a discriminator comprising the LLM and the validator, the data value generated by the selected generator as one of true positive, true negative, false positive, and false negative, using a plurality of formal clauses, wherein the classification indicates accuracy of labeling of the data value generated by the selected generator, determined separately by the validator and the LLM forming the discriminator, and wherein the plurality of formal clauses are re-learnt if the classification is one of true positive and true negative; determining whether there is a discrepancy in the determined classification by the validator and the LLM, wherein if there exists the discrepancy, the classification is one of false positive and false negative; and refining the validator using a feedback based mechanism, if the discrepancy is determined, using a gathered evidence, to obtain a refined validator.

In an aspect of the method, the plurality of formal clauses are symbolic encodings of data properties that are feedback to the LLM with respect to at least one of one or more incorrect or missing behaviour of the validator, and wherein the plurality of formal clauses act as witnesses to correctness of the data values generated by the plurality of generators, and the validator.

In another aspect of the method, the plurality of formal clauses are learnt for the data value classified as true positive and true negative, and a consistency check is performed to determine correctness of the learnt formal clause, wherein one or more of the plurality of generators is rewarded or punished based on the consistency check, and wherein information on the reward or punishment is used for selecting the generator by sampling, in a subsequent iteration in the plurality of iterations.

In another aspect of the method, a final generator from among the plurality of generators, that receives most positive validation from the validator is used for generating synthetic data generation.

In another aspect, a system is provided. The system includes one or more hardware processors, a communication interface, and a memory storing a plurality of instructions. The plurality of instructions cause the one or more hardware processors to: process, using a Large Language Model (LLM) via one or more hardware processors, an input specification in natural language, to generate a plurality of generators and a validator, wherein each of the plurality of generators generates a single data value and the validator labels a data value as one of true and false; and iteratively perform, for a pre-defined number of iterations: selecting a generator from among the plurality of generators using sampling to generate an associated data value; classifying, via a discriminator comprising the LLM and the validator, the data value generated by the selected generator as one of true positive, true negative, false positive, and false negative, using a plurality of formal clauses, wherein the classification indicates accuracy of labeling of the data value generated by the selected generator, determined separately by the validator and the LLM forming the discriminator, and wherein the plurality of formal clauses are re-learnt if the classification is one of true positive and true negative; determining whether there is a discrepancy in the determined classification by the validator and the LLM, wherein if there exists the discrepancy, the classification is one of false positive and false negative; and refining the validator using a feedback based mechanism, if the discrepancy is determined, using a gathered evidence, to obtain a refined validator.

In an aspect of the system, the plurality of formal clauses are symbolic encodings of data properties that are feedback to the LLM with respect to at least one of one or more incorrect or missing behaviour of the validator, and wherein the plurality of formal clauses act as witnesses to correctness of the data values generated by the plurality of generators, and the validator.

In another aspect of the system, the plurality of formal clauses are learnt for the data value classified as true positive and true negative, and a consistency check is performed to determine correctness of the learnt formal clause, wherein one or more of the plurality of generators is rewarded or punished based on the consistency check, and wherein information on the reward or punishment is used for selecting the generator by sampling, in a subsequent iteration in the plurality of iterations.

In another aspect of the system, a final generator from among the plurality of generators, that receives most positive validation from the validator is used for generating synthetic data generation.

In yet another aspect, a non-transitory computer readable medium is provided. The non-transitory computer readable medium includes a plurality of instructions, which when executed, cause one or more hardware processors to: process, using a Large Language Model (LLM), an input specification in natural language, to generate a plurality of generators and a validator, wherein each of the plurality of generators generates a single data value and the validator labels a data value as one of true and false; and iteratively perform, for a pre-defined number of iterations: selecting a generator from among the plurality of generators using sampling to generate an associated data value; classifying, via a discriminator comprising the LLM and the validator, the data value generated by the selected generator as one of true positive, true negative, false positive, and false negative, using a plurality of formal clauses, wherein the classification indicates accuracy of labeling of the data value generated by the selected generator, determined separately by the validator and the LLM forming the discriminator, and wherein the plurality of formal clauses are re-learnt if the classification is one of true positive and true negative; determining whether there is a discrepancy in the determined classification by the validator and the LLM, wherein if there exists the discrepancy, the classification is one of false positive and false negative; and refining the validator using a feedback based mechanism, if the discrepancy is determined, using a gathered evidence, to obtain a refined validator.

In an aspect of the non-transitory computer readable medium, the plurality of formal clauses are symbolic encodings of data properties that are feedback to the LLM with respect to at least one of one or more incorrect or missing behaviour of the validator, and wherein the plurality of formal clauses act as witnesses to correctness of the data values generated by the plurality of generators, and the validator.

In another aspect of the non-transitory computer readable medium, the plurality of formal clauses are learnt for the data value classified as true positive and true negative, and a consistency check is performed to determine correctness of the learnt formal clause, wherein one or more of the plurality of generators is rewarded or punished based on the consistency check, and wherein information on the reward or punishment is used for selecting the generator by sampling, in a subsequent iteration in the plurality of iterations.

In another aspect of the non-transitory computer readable medium, a final generator from among the plurality of generators, that receives most positive validation from the validator is used for generating synthetic data generation.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for a formal clause based refinement of Large Language Model (LLM) generated validators, according to some embodiments of the present disclosure.
FIG. 2 is a functional flow diagram of the formal clause based refinement of Large Language Model (LLM) generated validators, using the system of FIG. 1, according to some embodiments of the present disclosure.
FIG. 3 is a flow diagram illustrating steps involved in the process of the formal clause based refinement of Large Language Model (LLM) generated validators, using the system of FIG. 1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

While LLMs can be used for generating the synthetic data, a key and recurring challenge is in building trust and credibility in the LLM generated synthetic data, while keeping generation costs low. A potential solution to reduce the dependence on manual evaluation, was automated evaluation. Automated evaluation techniques could replace manual evaluation and provide a scalable solution to verify the correctness of the generated data. Some automated evaluators use LLM-as-judges with or without human-in-the-loop, while others use evaluation metrics such a superGlue, HellaSwag, MMLU, and so on. In cases, where the LLMs are used to generate programs, which in turn generates data, it is common to use functional correctness metrics like passk which computes the probability that at least one of the top k-generated code samples for the data generation problem passes the unit tests. Although, current automated evaluation techniques can provide a good starting point for assessing the quality of the generated data, these approaches do not correct the data or explain reasons for the errors in the data.

In order to address these challenges, a method and system for formal clause based refinement of validators for test data generation are provided. This approach fine-tunes a validator based on formal clauses, and the validator is then used for validating data generated by a plurality of generators. In this process, based on the validation done by the validator, a generator that is most accurate in terms of accuracy of data generated, is identified, and then the data generated by this generator maybe used for various applications such as the synthetic data generation. The process of fine-tuning the validator is explained below. In this method, an input specification in natural language is processed using a Large Language Model (LLM), to generate a plurality of generators and a validator. Each of the plurality of generators generates a single data value and the validator labels a data value as one of true and false. Further, the following steps are iteratively performed, for a pre-defined number of iterations. In the iterative process, a generator from among the plurality of generators is selected using sampling to generate an associated data value. Further, the data value is classified via a discriminator comprising the LLM and the validator, as one of true positive, true negative, false positive, and false negative, using a plurality of formal clauses. The classification indicates accuracy of labeling of the data value generated by the selected generator, determined separately by the validator and the LLM forming the discriminator. If the classification is one of true positive and true negative, the formal clauses are re-learnt. Further, it is determined whether there is a discrepancy in the determined classification by the validator and the LLM. If the discrepancy exists, the classification is one of false positive and false negative. Further, the validator is refined using a feedback based mechanism, if the discrepancy is determined, using a gathered evidence, to obtain a refined validator.

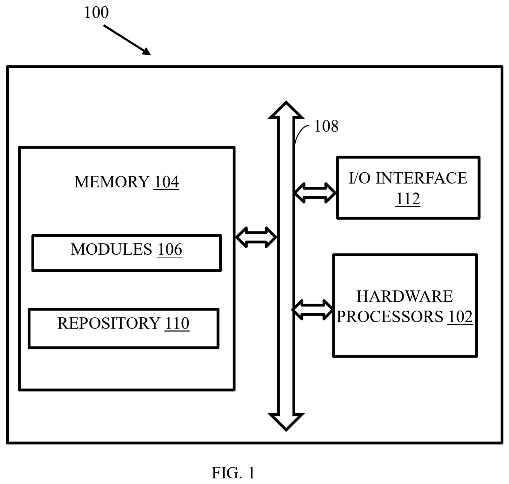

Referring now to the drawings, and more particularly to FIG. 1 through FIG. 3, where similar reference characters denote corresponding features consistently throughout the figures, there are shown preferred embodiments and these embodiments are described in the context of the following exemplary system and/or method.

FIG. 1 illustrates an exemplary system for a formal clause based refinement of validators, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of the formal clause based refining of Large Language Model (LLM) validator, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the formal clause based refinement of validators.

The data repository (or repository) 110 may include a plurality of abstracted piece of code for refinement and data that is processed, received, or generated as a result of the execution of the plurality of modules in the module(s) 106.

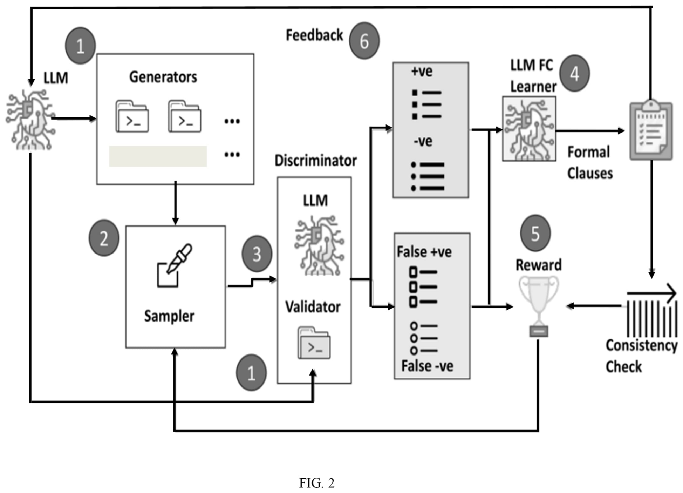

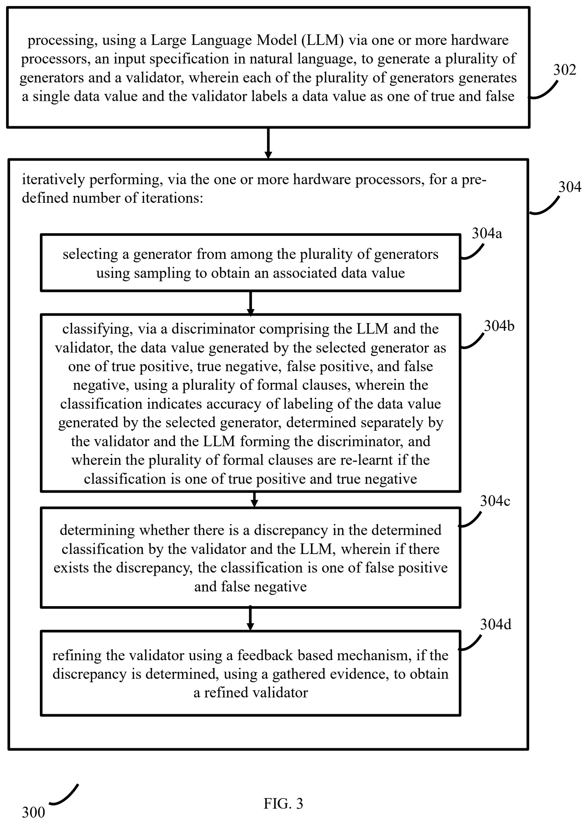

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). In an implementation of the system 100, the system 100 comprises a LLM, a plurality of generators generated by the LLM, a sampler, a discriminator, a LLM formal clause learner, and a reward component. Working of the system 100 is explained with reference to the functional block diagram in FIG. 2, and the steps in the flow diagram in FIG. 3.

FIG. 3 is a flow diagram illustrating steps involved in the process of the formal clause based refinement of validators, using the system of FIG. 1, in accordance with some embodiments of the present disclosure.

In an embodiment, the system 100 comprises one or more data storage devices or the memory 104 operatively coupled to the processor(s) 102 and is configured to store instructions for execution of steps of a method 200 in FIG. 2, by the processor(s) or one or more hardware processors 102. The steps of the method 500 of the present disclosure will now be explained with reference to the components or blocks of the system 100 as depicted in FIG. 1, and the components as depicted in the functional block diagram in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 302 of method 300 in FIG. 3, the system 100 processes, using a Large Language Model (LLM) via the one or more hardware processors 102, an input specification in natural language to generate a plurality of generators and a validator. The plurality of generators are represented as *G*₁*, G*₂*,* ..... *Gₙ,* and the validator is represented as *V*₁. Each of the plurality of generators G*ᵢ*, when executed, generates a single data value, and the validator *V*₁ labels a data value as one of true and false. The input specification is a text in natural language, that indicates to the system 100, a data generation requirement. For example, the input specification for a patient enrolment ID at a hospital is given below:
*"In the hospital, each patient is assigned a unique enrolment ID, which is in the form A11111, that means, an uppercase alphabet followed by 5-digit number. There are specific categories for assigning these prefix alphabets. If the 5-digit number is odd, then the prefix must be 'O'. If the 5-digit number is even, then there are 2 subcategories in this. If the number is even and divisible by 4, then the prefix must be 'F'. If the number is even and not divisible by 4, then its prefix must be 'T'. These categories are crucial for further processing of patient records for insurance claim and in-patient treatment."*

In this example, the requirement is to generate synthetic data, i.e., for patient enrolment purposes at the hospital. In an embodiment, the input specification is fed to the system 100 by a user, using a suitable user interface. In another embodiment, the input specification is fetched by the system 100 from one or more associated external systems, as input.

Further, at step 304, the system 100 fine-tunes a validator by iteratively performing sub-steps 304a through 304d, for 'k' iterations, wherein value is pre-defined, and may be heuristically selected. The sub-steps 304a through 304d are explained hereafter.

At step 304a, of the selecting a generator from among the plurality of generators using sampling to generate an associated data value. The sampling process used maybe any known and suitable one. For example, a Thompson Sampling with a Beta-Bernoulli bandit model, which is a Bayesian approach to effectively manage exploration and exploitation in online decision problems, like the Multi Armed Bandit problem, is used. In this approach, the system 100 balances exploration of the plurality of generators that can produce a diverse set of data points and formal clauses (also denoted as 'FC'), and the exploitation of the a generator whose data points generate formal clauses with consistently high confidence values. For example, for each generator program *Gᵢ*, the probability of successfully learning a high confidence formal clause consistent with the input specification is captured using a Beta distribution Beta(αᵢ, βᵢ), where αᵢ is approximate number of successes for generator *Gᵢ* and β*ᵢ* is the approximate number of failures for generator *Gᵢ*. Then a value *θᵢ* is sampled from the posterior distribution of Beta(αᵢ, βᵢ) for each *Gᵢ* and the generator program *Gⱼ* with the highest sampled value is picked for generating a data value dp. It was observed that choosing the generator program *Gⱼ* with the highest *θ* encourages the generation of data values that are more likely to lead to learning formal clauses consistent with the specification *Spec.*

Further, at step 304b, the system 100 classifies, via a discriminator comprising the LLM and the validator, the data value dp generated by the selected generator as one of true positive (*truepos*), true negative (*trueneg*), false positive (*falsepos*), and false negative (*falseneg*)*,* using a plurality of formal clauses. The plurality of formal clauses are symbolic encodings of data properties and wherein the plurality of formal clauses act as witnesses to correctness of the data values generated by the plurality of generators,. The classification indicates accuracy of labeling of the data value generated by the selected generator, determined separately by the validator and the LLM forming the discriminator. In this process, the discriminator performs three checks - (1) *Vᵢ* (*dp*)*,* (2) *LLM* (*dp, Spec*) and (3) *dp* |= *γ* where *γ* is a formal clause in the set 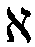 of formal clauses learnt. The check *LLM (dp, Spec)* is done by prompting the LLM to judge if the data value dp is valid or invalid according to the input specification *Spec.* If the LLM judges dp to be valid it returns value 'true' and 'false' otherwise. The check dp |= γ checks if the formal clause is satisfied. The classification to the four categories are as follows:

If *Vᵢ (dp)* = true and *LLM (dp, Spec)* = false, then dp is a false positive. In this case, an assumption is made that the validator has incorrectly classified the data value as valid. This is to ensure that the validator is fixed, if this assumption is correct. If *Vᵢ (dp)* = false and ∃γ ∈ 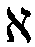 *, dp* | = γ*,* then dp is a false negative. Here, the existence of a formal clause is evidence that the validator's classification is likely incorrect. c. If *Vᵢ* (*dp*) = true and *LLM* (*dp, Spec*) = true, then dp is a true positive. As both the LLM and the validator agree on the classification of the data value, it is assumed that the data value is a true positive with a degree of confidence, d. If *Vᵢ* (*dp*) = false and ∀γ ∈ 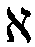 , dp/|= γ, then dp is a true negative. In this case, the absence of a formal clause that captures the properties of the data value is evidence that the validator's judgement is likely correct and the data value is a true negative. When the classification is *truepos,* it is inferred that the data value is valid. When the data value dp is classified as *trueneg,* the absence of a formal clause that is satisfied by dp is evidence that the classification is likely correct. The plurality of formal clauses are learnt for the data value classified as *truepos* and *trueneg,* and a consistency check is performed to determine correctness of the learnt formal clause. One or more of the plurality of generators are rewarded or punished based on the consistency check, and information on the reward or punishment is used for selecting the generator by sampling, in a subsequent iteration in the plurality of iterations. The consistency check may fail in the following instances: a) formal clause *γ* is empty, b) the data value dp does not satisfy *γ,* c) the data value dp does not satisfy a formal clause *γ* extracted from *Spec* that is relevant to *γ.* The check of type (c) is done by converting the formal clause *γ* to a natural language description *γₙₗ,* extracting parts of the natural language specification RelSpec that are relevant to *γₙₗ,* converting RelSpec to another formal clause *γ_{rc}* and checking if *γ_{rc}* and *γ* both represent the same properties of dp.

If both *γ* and *γ_{rc}* represent the same properties of dp, then a confidence metric CONF_{γ} of the formal clause *γ* is increased by a pre-set parameterized value *m* and the function returns *true.* The consistency check also triggers an update to the rewards for the currently picked generator program *Gᵢ*. The success parameter α*ᵢ* is incremented by 1 if the consistency check is passed, thus rewarding the generator while the failure parameter β*ᵢ* is incremented by 1 if the consistency check fails, penalizing the generator.

An algorithmic representation of working of the discriminator is given below:

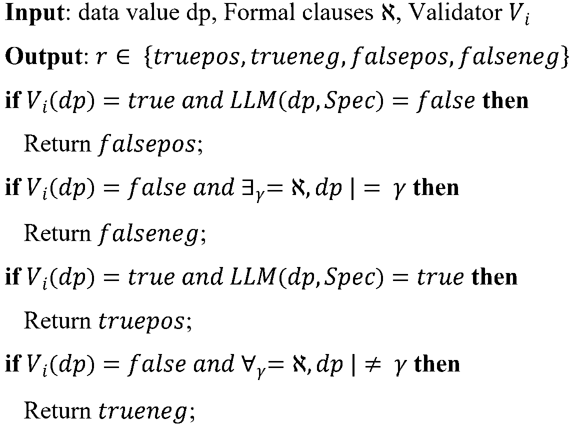

Further, at step 304c, the system 100 determines whether there is a discrepancy in the determined classification by the validator and the LLM. If the discrepancy is found to be existing, then there are two possibilities: When the data value dp has been classified as a *falsepos* there is a discrepancy between the validator and the LLM's judgement. Similarly, when the data value dp has been classified as a *falseneg* there is a discrepancy between the validator and the evidence available as learnt formal clauses. In either case, this warrants a refinement or fixing of the validator with appropriate feedback that accounts for the discrepancy.

Further, at step 304d, the system 100 refines the validator using a feedback based mechanism, if the discrepancy is determined, to obtain a refined validator. In this process, First, the system 100 gathers additional evidence to justify the validator refinement. For the *falseneg* cases the additional evidence is collected from data values that are initially classified as *trueneg* but for which formal clauses are learnt. These formal clauses represent missing control checks in the validator and are used as feedback to the LLM to refine and regenerate the validator. In the *falsepos* case, the additional evidence is gathered from data values that are classified as *falsepos* but which do not satisfy any conjunction of formal clauses denoted by paths in the set 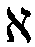 learnt so far. This corresponds to evidence that the validator contains spurious control checks that allow such data values to pass. In both these cases, if a preset number of, for example, *p* such data values are seen then the learnt formal clauses are used as feedback to refine the validator. In the case when dp is classified as a *trueneg* but a formal clause *γ* is learnt in subsequent steps with successful consistency check, it leads to a subsequent reclassification of dp or other similar data values to a *falseneg* in the subsequent iterations, in turn triggering the validator refinement. Once the validator is refined, a final generator from among the plurality of generators, that receives most positive validation from the validator is used for generating synthetic data generation.

The method 300 was evaluated using a benchmark set 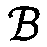 of 52 natural language specifications derived from industrial use cases across various domains such as medical, education, banking and finance, retail, consumer services, and others to answer the following research questions:
- RQ1: How effective is method 300 in fixing incorrect LLM produced validators to ensure that they can correctly validate synthetic data according to a natural language specification?
- RQ2: Is method 300 an effective technique for automatically evaluating the correctness of LLM generated validators?

Given below is one input specification used for the evaluation:
*The ISBN (International Standard Book Number) exists in two formats: ISBN-10, used for books published before January 1, 2007, consists of 10 digits where the first 9 digits represent the book's unique identifier, and the 10th digit is a check digit (0-9 or "X" for 10). For example, an ISBN-10 might look like 0-306-40615-2. ISBN-13, introduced in 2007, consists of 13 digits, starting with the prefix 978 or 979, which indicates the book's category, followed by segments that vary depending on the publisher and title, and ending with a check digit. An example of an ISBN-13 is 978-3-16-148410- 0. The components of an ISBN include the prefix element (usually 978 or 979 for ISBN-13), the registration group element (indicating the country, language, or geographical area), the registrant element (identifying the publisher), the publication element (indicating the specific edition or title), and the check digit, which is calculated from the preceding digits to verify the validity of the ISBN.*

The benchmarks were chosen to cover a wide variety of industrial synthetic data generation use cases, so that the evaluation encompasses diverse scenarios and challenges. The experiments were conducted on a machine with 16GB RAM and an Intel Core i5 processor running Windows 11. OpenAI GPT-3.5-turbo model hosted on Azure was used as the Large Language Model (LLM) in Method 300. The hyperparameters of the LLM were as follows (1) the maximum number of tokens was set to 2000, (2) the temperature was set to 0.8, and (3) number of completions was set to 1. For the Thompson sampling algorithm used in the reinforcement learning, the values of α and β were initialized to 1. The number of iterations k was set to 200. The increment *m* of the confidence CONF_{γ} metric for the consistency check was set to 1. The number of data values *p* used as evidence threshold was set to 5.

To answer RQ1, for each benchmark *b* ∈ 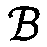 *,* 5 generators and 1 validator were synthesized using the LLM. All validators were then manually validated and partitioned them into two sets- correct and incorrect, based on whether they correctly validated the synthetic data generated by the generators according to the benchmark specification. At the end of the manual evaluation, 32 i.e. 61.53% were found to be correct, while 20 i.e. 38.46% of all LLM synthesized validators were found to be incorrect. For each benchmark specification, the method 300 was then executed with the validator for that specification, the full set of generators and specification as input. The output of the method 300 were refined validators that were then again manually evaluated for correctness and two sets of validators were identified: (1) the set of validators that were incorrectly generated by the LLM but automatically fixed by Method 300, and (2) the set of validators that were incorrectly generated by the LLM that could not be fixed by the Method 300. At the end of the evaluation, Method 300 was able to fix 14 validators, out of 20 incorrectly generated validators, while the remaining 6 validator programs could not be fixed to validate data values according to the specification. There were several reasons why the incorrect validators could not be fixed. However, it was observed that most of these reasons were related to ambiguous or highly complex specifications due to which the formal clauses learnt by the method 300 were either incorrect or were incomplete. An example complex specification, for which the validator could not be fixed is given in the box with title ISBN. Some of these limitations can be mitigated by using a richer syntax for formal causes that can capture constraints in the data that match the specifications. However, since the method 300 could fix 70% of the total number of buggy validators generated by the LLM RQ1 could be answered positively. Evaluation of RQ1 by the method 300 can be an effective technique for fixing buggy validators generated by LLMs.

To answer RQ2, the method 300 was first executed on each *b* ∈ 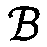 again with 5 generators and 1 validators per benchmark. When the method 300 finished, generators with highest θ values were selected for each benchmark and were executed to generate 200 data values. The data values were then validated using validators refined by Method 300 along with the LLM as follows: if both the validator and the LLM returned true for a data value, it was considered a true positive (TP), if both returned false, it was considered a true negative (TN), if the validator returned true and the LLM returned false, it was considered a false positive (FP), and if the validator returned false and the LLM returned true, it was considered a false negative (FN). Following this two types of metrics were collected. The first metric was the misclassification rate of the validators, given by the expression δ = FP+FN TP+TN+FP+FN . The second metric collected was the sum over confidence values CONF_{γ} for each formal clause γ in the set of formal clauses 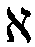 learnt by the method 300 for each validator. The sum Γ = X γ∈ 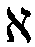 CONF_{γ} is termed as the total confidence for each validator *Vᵢ*. It was hypothesized that the total confidence value of the formal clauses learnt by the method 300 is high for correct validators and low for incorrect validators. This is based on the expectation that a relatively higher number will pass the consistency checks for correct validators. Table I shows the correlation between misclassification rate and the total confidence with the correctness of the validators.

**Table I: Correlation between confidence values, misclassification rates, and correctness of validators**

| | Total (Manual) | Γ > 33 | *δ*< 0.2 | Γ > 33 A *δ*< 0.2 |
|---|---|---|---|---|
| LLM Correct | 32 | 25 | 26 | 23 |
| LLM Incorrect Fixed | 14 | 4 | 13 | 3 |
| LLM incorrect unfixed | 6 | 1 | 4 | 0 |

The total confidence Γ for all 52 validators ranged from 0 to 127 with 33 as the value at the 40th percentile. It was observed that out of the 46 validators that were either correctly generated by the LLM or fixed by the method 300, 29 (63.04%) had a total confidence value greater than 33, 39 (84.78%) validators had a misclassification rate less than 0.2, and 26 (56.52%) validators had both a total confidence value greater than 33 and a misclassification rate less than 0.2. This trend holds when only the 32 LLM generated correct validators were considered, where the numbers are 25 (78.12%), 26 (81.25%), and 23 (71.87%) respectively. Thus, a low misclassification rate is a good predictor of the correctness of the validators.

For validators that were not fixed by the method 300, the numbers were 1 out of 6 (16.66%), 4 out of 6 (66.66%), and 0 out of 6 (0%) respectively indicating that the total confidence is a better predictor of validator incorrectness. Hence, a composite strategy that first filters out validators with a high misclassification rate followed by filtering out validators with low total confidence values can be used to automatically identify correct validators leading to a positive answer to RQ2.
Evaluation of RQ2: *Metrics generated by Method 300 are good predictors of validator correctness and can serve as a reliable and automated evaluation technique for the correctness of the validators.*

Specification: *For a string to be a valid GTIN string, it should satisfy the following constraints. The length of the string can be either 8, 12, 13 or 14. Each character in the string is a number. The last digit of the string is the check digit. For string with length 8,12 and 14, the check digit is calculated in the following steps. Numbers at odd position in the string are multiplied by 3. The sum of all the digits is calculated after multiplication. Modulus 10 is applied on the sum. The result of the modulus is the check value. For string with length 13, the check sum is calculated by the following steps. The numbers at even position are multiplied by 3. The sum of all digits is calculated after multiplication. Modulus 10 is applied on the sum. The result of the modulus is the check value in the string with length 13.*
Formal Clauses: all(char.isdigit() for char in Value[:-1]) and (len(Value) == 8) or (len(Value) == 12) or (len(Value) == 13) or (len(Value) == 14) and (int(Value[-1]) == sum(int(Value[i]) * 3 if I % 2 != 0 else int(Value[i]) for i in range(len(Value) - 1)) % 10)

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of validation and correction of data generated by LLMs. The embodiment, thus provides a mechanism for refining a validator using a formal clause based approach. Moreover, the embodiments herein further provide validating data values generated by a plurality of generators, using refined validator.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
processing (302), using a Large Language Model (LLM) via one or more hardware processors, an input specification in natural language, to generate a plurality of generators and a validator, wherein each of the plurality of generators generates a single data value and the validator labels a data value as one of true and false; and
iteratively performing (304), via the one or more hardware processors, for a pre-defined number of iterations:
selecting (304a) a generator from among the plurality of generators using sampling to generate an associated data value;
classifying (304b), via a discriminator comprising the LLM and the validator, the data value generated by the selected generator as one of true positive, true negative, false positive, and false negative, using a plurality of formal clauses, wherein the classification indicates accuracy of labeling of the data value generated by the selected generator, determined separately by the validator and the LLM forming the discriminator, and wherein the plurality of formal clauses are re-learnt if the classification is one of true positive and true negative;
determining (304c) whether there is a discrepancy in the determined classification by the validator and the LLM, wherein if there exists the discrepancy, the classification is one of false positive and false negative; and
refining (304d) the validator using a feedback based mechanism, if the discrepancy is determined, using a gathered evidence, to obtain a refined validator.

2. The method as claimed in claim 1, wherein the plurality of formal clauses are symbolic encodings of data properties that are feedback to the LLM with respect to at least one of one or more incorrect or missing behaviour of the validator, and wherein the plurality of formal clauses act as witnesses to correctness of the data values generated by the plurality of generators, and the validator.

3. The method as claimed in claim 1, wherein the plurality of formal clauses are re-learnt for the data value classified as true positive and true negative, and a consistency check is performed to determine correctness of the learnt formal clause, wherein one or more of the plurality of generators is rewarded or punished based on the consistency check, and wherein information on the reward or punishment is used for selecting the generator by sampling, in a subsequent iteration in the plurality of iterations.

4. The method as claimed in claim 1, wherein a final generator from among the plurality of generators, that receives most positive validation from the validator, is used for generating synthetic data generation.

5. A system (100), comprising:
one or more hardware processors (102);
a communication interface (112); and
a memory (104) storing a plurality of instructions, which causes the one or more hardware processors to:
process, using a Large Language Model (LLM) via one or more hardware processors, an input specification in natural language, to generate a plurality of generators and a validator, wherein each of the plurality of generators generates a single data value and the validator labels a data value as one of true and false; and
iteratively perform, for a pre-defined number of iterations:
selecting a generator from among the plurality of generators using sampling to generate an associated data value;
classifying, via a discriminator comprising the LLM and the validator, the data value generated by the selected generator as one of true positive, true negative, false positive, and false negative, using a plurality of formal clauses, wherein the classification indicates accuracy of labeling of the data value generated by the selected generator, determined separately by the validator and the LLM forming the discriminator, and wherein the plurality of formal clauses are re-learnt if the classification is one of true positive and true negative;
determining whether there is a discrepancy in the determined classification by the validator and the LLM, wherein if there exists the discrepancy, the classification is one of false positive and false negative; and
refining the validator using a feedback based mechanism, if the discrepancy is determined, using a gathered evidence, to obtain a refined validator.

6. The system as claimed in claim 5, wherein the plurality of formal clauses are symbolic encodings of data properties that are feedback to the LLM with respect to at least one of one or more incorrect or missing behaviour of the validator, and wherein the plurality of formal clauses act as witnesses to correctness of the data values generated by the plurality of generators, and the validator.

7. The system as claimed in claim 5, wherein the plurality of formal clauses are learnt for the data value classified as true positive and true negative, and a consistency check is performed to determine correctness of the learnt formal clause, wherein one or more of the plurality of generators is rewarded or punished based on the consistency check, and wherein information on the reward or punishment is used for selecting the generator by sampling, in a subsequent iteration in the plurality of iterations.

8. The system as claimed in claim 5, wherein a final generator from among the plurality of generators, that receives most positive validation from the validator, is used for generating synthetic data generation.

9. One or more non-transitory machine-readable information storage mediums comprising one or more instructions which when executed by one or more hardware processors cause:
processing, using a Large Language Model (LLM), an input specification in natural language, to generate a plurality of generators and a validator, wherein each of the plurality of generators generates a single data value and the validator labels a data value as one of true and false; and
iteratively performing for a pre-defined number of iterations:
selecting a generator from among the plurality of generators using sampling to generate an associated data value;
classifying via a discriminator comprising the LLM and the validator, the data value generated by the selected generator as one of true positive, true negative, false positive, and false negative, using a plurality of formal clauses, wherein the classification indicates accuracy of labeling of the data value generated by the selected generator, determined separately by the validator and the LLM forming the discriminator, and
wherein the plurality of formal clauses are re-learnt if the classification is one of true positive and true negative;
determining whether there is a discrepancy in the determined classification by the validator and the LLM, wherein if there exists the discrepancy, the classification is one of false positive and false negative; and
refining the validator using a feedback based mechanism, if the discrepancy is determined, using a gathered evidence, to obtain a refined validator.

10. The one or more non-transitory machine readable information storage mediums as claimed in claim 9, wherein the plurality of formal clauses are symbolic encodings of data properties that are feedback to the LLM with respect to at least one of one or more incorrect or missing behaviour of the validator, and wherein the plurality of formal clauses act as witnesses to correctness of the data values generated by the plurality of generators, and the validator.

11. The one or more non-transitory machine readable information storage mediums as claimed in claim 9, wherein the plurality of formal clauses are re-learnt for the data value classified as true positive and true negative, and a consistency check is performed to determine correctness of the learnt formal clause, wherein one or more of the plurality of generators is rewarded or punished based on the consistency check, and wherein information on the reward or punishment is used for selecting the generator by sampling, in a subsequent iteration in the plurality of iterations.

12. The one or more non-transitory machine readable information storage mediums as claimed in claim 9, wherein a final generator from among the plurality of generators, that receives most positive validation from the validator, is used for generating synthetic data generation.
